# EUROPÄISCHE PATENTSCHRIFT

(11) **EP 4 729 440 B1**
(45) Veröffentlichungstag und Bekanntmachung des Hinweises auf die Patenterteilung: **14.10.2026**
(21) Anmeldenummer: 25209647.4
(22) Anmeldetag: 20.10.2025
(51) Int. Cl.: B65F 3/20, B30B 3/02, B30B 9/30, F16C 35/10

(54) **ACHSANORDNUNG**
AXLE ARRANGEMENT
ASSEMBLAGE POUR ESSIEUX

(30) Priorität: 21.10.2024 DE 102024130564
(43) Veröffentlichungstag der Anmeldung: 22.04.2026
(73) Patentinhaber: Haller Benelux B.V., 5321 JA Hedel (NL)
(72) Erfinder: Hartmann, Max, 7323 EN Apeldoorn (NL)
(74) Vertreter: Regler, Markus Egid

(56) Entgegenhaltungen:
- EP-A1- 2 085 331
- EP-A1- 2 366 639
- WO-A1-2023/106435
- DE-A1- 102011 102 068

## Beschreibung

Die Erfindung betrifft eine Achsanordnung mit den Merkmalen von Patentanspruch 1.

Bei der Befüllung von Abfallsammelfahrzeugen wird der Abfall aus Abfallbehältern üblicherweise in eine Ladewanne gekippt. Von dort wird der Abfall in einen Sammelraum befördert und dabei zumeist komprimiert, um eine möglichst große Abfallmenge in dem Fahrzeug zu transportieren. Die dabei zum Einsatz kommenden Kompaktierungssysteme sind während einer Sammelfahrt andauernd im Einsatz, so dass die Gefahr von Verschleiß der beweglichen Komponenten sehr hoch ist. Die EP 2 366 639 A1 zeigt ein Kompaktierungssystem mit einer Pressschaufel, die den Abfall in den Sammelraum eines Abfallsammelfahrzeugs bewegt und diesen dabei gegen ein Ausstoßschild verpresst.

Die Arme eines Kompaktierungssystems sind mittels Achsanordnungen mittelbar oder unmittelbar am Rahmen eines Heckteils eines Abfallsammelfahrzeugs befestigt. Dabei wird üblicherweise die Achse rotatorisch beweglich in zwei Lagern, Durchbrüchen in Blechelementen, gehalten und in dem Abschnitt zwischen den Lagern von einem Arm umgriffen. Dadurch wird ein gelenkig beweglicher Anbindungspunkt für den Arm des Kompaktierungssystems gebildet.

Bedingt durch Fertigungstoleranzen hat die Achse aber regelmäßig Spiel in den Lagern was bei andauernder Belastung durch hohe Zugkräfte zu Verschleiß der Lager und der Achse führt. Die Folge ist ein hoher Reparaturaufwand.

Es ist die Aufgabe der vorliegenden Erfindung, eine Achsanordnung vorzuschlagen, die verschleißfrei betrieben werden kann.

Die Aufgabe wird gelöst durch eine Achsanordnung mit den Merkmalen von Patentanspruch 1. Besondere Ausgestaltungen der Erfindung sind Gegenstand der abhängigen Ansprüche.

Die Erfindung betrifft eine Achsanordnung für ein Kompaktierungssystem eines Abfallsammelfahrzeuges mit zwei Achsaufnahmen jeweils aufweisend eine Achse mit einem konisch geformten ersten Endabschnitt, zwei voneinander beabstandete Lagerelemente, wobei das erste Lagerelement einen ersten Durchbruch zur Aufnahme der Achse aufweist und das zweite Lagerelement eine Buchse mit einem konischen Aufnahmeraum für die Achse aufweist, wobei die Achse reibschlüssig in dem ersten Lagerelement gehalten ist und der konisch geformte Endabschnitt der Achse in dem konischen Aufnahmeraum gehalten ist.

Die Achsanordnung ist üblicherweise im Heckteil eines Abfallsammelfahrzeugs angeordnet, in dem sich auch das Kompaktierungssystem befindet. Die beiden Arme des Kompaktierungssystems umgreifen je eine Achse und sind dort rotatorisch beweglich gelagert. An den Armen ist eine Pressplatte gelagert, die hydraulisch bewegt und von den Armen geführt wird, um den in einer Ladewanne befindlichen Abfall in den Sammelraum des Abfallsammelfahrzeugs zu befördern und dabei zu komprimieren.

Die beiden Lagerelemente einer Achsaufnahme liegen sich beabstandet gegenüber, wobei die Arme die Achse in dem Bereich zwischen den Lagerelementen umfassen.

Bei dem ersten Lagerelement handelt es sich um einen Durchbruch, üblicherweise in einem als Tragelement ausgeführten Blech, der so ausgestaltet ist, dass die Achse dort reibschlüssig gehalten ist. Damit hat die Achse in dem ersten Lagerelement weder radial noch translatorisch Spiel, wodurch Verschleiß durch Reibung vermeiden wird.

Das zweite Lagerelement weist eine Buchse mit einem konischen Aufnahmeraum auf. Ein longitudinaler Endabschnitt der Achse ist ebenfalls konisch und komplementär zu dem Aufnahmeraum geformt. Der konisch geformte Endabschnitt der Achse ist in der Buchse gehalten. Die konische Ausgestaltung der Komponenten führt dazu, dass auch hier eine Beweglichkeit der Achse in radialer und translatorischer Richtung vermieden wird.

Die Kombination dieser beiden Lagerungen führt dazu, dass die Achsen der Achsanordnung ohne Spiel fest in den Achsaufnahmen gehalten sind, jegliche Fertigungstoleranzen eliminiert sind und somit kein Verschleiß mehr eintreten kann. Das führt in der Folge zu geringerem Reparaturaufwand, geringeren Standzeiten der Fahrzeuge und damit zu Kostenreduzierung und Nachhaltigkeit.

In einer besonderen Ausgestaltung der Erfindung weist das erste Lagerelement eine in dem ersten Durchbruch angeordnete Spannbuchse auf. Die Verwendung einer Spannbuchse hat insbesondere bei der Montage Vorteile. Zunächst kann vorteilhafterweise die Achse nach dem Einführen in die Achsaufnahme in dem zweiten Lagerelement befestigt werden und nachfolgend der Reibschluss über die Spannbuchse in dem ersten Lagerelement hergestellt werden. Dadurch wird die Montage der Achse vereinfacht und herstellungsbedingte Toleranzen können in einfacher Weise eliminiert werden.

In einer weiteren Ausgestaltung der Erfindung weist das erste Lagerelement ein im Bereich des ersten Durchbruches angeordnetes Verstärkungselement auf. Dadurch wird nicht nur das erste Lagerelement gegenüber den hohen mechanischen Belastungen verstärkt, sondern zusätzlich wird die Auflagefläche des Lagerelements für die Achse vergrößert. Das führt ebenfalls zu einer höheren Stabilität gegen Verschleiß.

Bei dem Verstärkungselement handelt es sich bevorzugt um ein Blechelement, das vorzugsweise stoffschlüssig, insbesondere schweißtechnisch, an dem ersten Lagerelement angeordnet ist.

Weiterhin bevorzugt ist vorgesehen, dass die Buchse in einem zweiten Durchbruch des zweiten Lagerelements, insbesondere mit einer Presspassung, angeordnet ist. Das zweite Lagerelement ist in dieser Ausführung mehrteilig ausgeführt. Es umfasst im Wesentlichen ein aus einem Blech hergestelltes Tragelement, in dem der zweite Durchbruch vorgesehen ist. In diesem Durchbruch ist die konisch geformte Buchse unverschieblich angeordnet. Der konische Aufnahmeraum des zweiten Lagerelements kann auf diese Weise einfach, günstig und maßgenau hergestellt werden. Zudem wird durch die unverschiebliche Anordnung ein möglicher Verschleiß an dieser Stelle vermieden.

Besonders bevorzugt wird die Buchse mittels einer Presspassung in dem zweiten Durchbruch angeordnet. Diese unverschiebliche Verbindung hat sich als vorteilhaft gegenüber einer Schweißverbindung herausgestellt, wo es zu Rissbildungen in dem Tragelement neben dem zweiten Durchbruch kommt. Insbesondere wird die Presspassung in einer tiefkalten Umgebung unter Verwendung von flüssigem Stickstoff hergestellt.

Eine weitere vorteilhafte Ausgestaltung der Erfindung sieht vor, dass die Achsaufnahmen beabstandet zueinander auf einem Querträger angeordnet sind. Die Achsaufnahmen sind dann räumlich fest zueinander angeordnet und aufeinander ausgerichtet. Für einen störungsfreien Betrieb des Kompaktierungssystems ist es wichtig, dass die Achsen präzise zueinander ausgerichtet sind, damit die Bewegung der Arme und damit der Pressplatte störungslos erfolgt. Dies wird durch die Anordnung als Montagegruppe auf dem Querträger ermöglicht. Verdrehung der Achsen zueinander während des Zusammenbaus wird vermieden.

Der Querträger ist bevorzugt mehrteilig, insbesondere als Schweißbaugruppe ausgeführt. Die Einzelteile werden zunächst schweißtechnisch miteinander verbunden und danach maschinell bearbeitet, wodurch Schweißspannungen im Zusammenbau vermieden werden.

Achsaufnahmen und Querträger stellen Unterbaugruppen dar, die zunächst einzeln zusammengefügt und dann miteinander verbunden werden. Damit sind die einzelnen Komponenten einer mechanischen Bearbeitung vor dem Zusammenbau problemlos zugänglich.

Der Querträger bildet zudem einen stabilen, versteifenden Unterbau für die Achsanordnung und versteift zudem das Heckteil, so dass im laufenden Betrieb materialschädliche Spannungen vermieden werden.

In einer weiteren bevorzugten Ausgestaltung der Erfindung weist die Achse eine longitudinale Durchgangsbohrung auf, die fluchtend zu einer korrespondierenden Bohrung in der Stirnseite der Buchse ausgerichtet ist, wobei die Achse und die Buchse mittels einer durch die Durchgangsbohrung und die Bohrung geführte Schraube miteinander verbunden sind. Die Durchgangsbohrung führt von dem dem ersten Lagerelement zugeordneten Endabschnitt der Achse zu dem konisch geformten Endabschnitt. Zumindest die Bohrung in der Buchse kann ein Gewinde aufweisen. Die Schraube durchgreift die Durchgangsbohrung der Achse und die Bohrung in der Stirnseite der Buchse. Durch die so erhaltene schraubtechnische Verbindung der Achse mit dem zweiten Lagerelement wird eine longitudinale Fixierung und durch die Konizität gleichzeitig eine radiale Fixierung der Achse in dem zweiten Lagerelement erzeugt.

Die Stirnseite der Buchse wirkt hier als Anschlag für den konisch geformten Endabschnitt der Achse.

Weiterhin bevorzugt ist vorgesehen, dass die Achse mit ihrem konisch geformten Endabschnitt vorgespannt in dem konischen Aufnahmeraum gehalten ist. Die Vorspannung wird insbesondere durch die schraubtechnische Verbindung bei der Montage hergestellt, indem durch das Anziehen der Schraube in der Durchgangsbohrung die Achse mit ihrem konischen Ende in die Buchse gepresst wird.

Durch die Vorspannung wird eine Relativbewegung zwischen Achse und Buchse verhindert.

In einer weiteren Ausgestaltung der Erfindung weist die Achse in ihrem zwischen den Lagerelementen liegenden Längenabschnitt Schmierungsrillen auf, die vorzugsweise spiralförmig in Längsrichtung verlaufen. Durch die Schmierungsrillen wird in diesem Bereich aufgetragenes Schmiermittel gleichmäßig über die Oberfläche der Achse verteilt, was durch eine spiralförmige Ausgestaltung der Schmierungsrillen weiter verbessert wird. Dadurch wird eine reibungsfreie Bewegung der Arme um die Achsen ermöglicht, was Verschleiß reduziert.

Eine weitere vorteilhafte Ausgestaltung der Erfindung sieht vor, dass die Achse einen Schmierungskanal aufweist mit einem in Längsrichtung der Achse verlaufenden ersten Abschnitt und einem im Wesentlichen senkrecht dazu zur Seitenfläche der Achse führenden zweiten Abschnitt, der in ihrem zwischen den Lagerelementen liegenden Längenabschnitt mündet. Die Eingangsöffnung des Schmierungskanals ist an dem dem ersten Lagerelement zugeordneten Endabschnitt der Achse vorgesehen. Der Schmierungskanal verläuft vorzugsweise im Wesentlichen parallel zur Längsachse der Achse in Richtung des zweiten konisch geformten Endabschnitts der Achse bis zu einem Punkt der zwischen den Lagerelementen liegt. An dieser Stelle schließt der zweite Abschnitt des Schmierungskanals an. Dieser ist im Wesentlichen senkrecht zu dem ersten Abschnitt angeordnet und mündet an der Seitenfläche oder Mantelfläche der Achse. Das Schmiermittel kann ohne weiteren Aufwand an einer gut zugänglichen Stellen in den Schmierungskanal gepresst werden und wird so an die Stelle gebracht, wo es benötigt wird.

Besonders vorteilhaft wird das an der Seitenfläche des Achsenabschnitts zwischen den Lagerelementen zutage tretende Schmiermittel durch die oben beschriebenen Schmierungsrillen weiter in Umfangs- und Längsrichtung der Achse verteilt.

Weiterhin bevorzugt weist die Achse einen Sensorkanal auf, insbesondere für einen Sensor zur Bestimmung von Verschleiß. Bei dem Sensorkanal handelt es sich um eine Bohrung, die sich bevorzugt parallel zur Längsachse der Achse erstreckt. In diese Bohrung wird ein Sensor eingebracht, der in der Bohrung vor Umwelteinflüssen geschützt ist, was eine dauerhafte Funktionsfähigkeit bewirkt, und der sich dadurch in unmittelbarer Nähe zu dem zu kontrollierenden Bereich der Achse befindet. Durch die nicht vollständig zu vermeidende Reibung zwischen Achse und Arm des Kompaktierungssystems kommt es in dem Bereich zwischen den Lagerelemente zu Verschleiß, der mit Hilfe des Sensors bestimmt werden kann.

Insbesondere erfolgt dies durch eine Messung von Temperaturunterschieden, die auf übermäßigen Verschleiß hindeuten können.

In einer weiteren Ausgestaltung der Erfindung ist die Achse zumindest abschnittsweise gehärtet. Bevorzugt erfolgt dies durch Induktionshärten, das heißt, die Oberfläche der Achse wird induktiv erhitzt und nachfolgend schnell abgekühlt. Die Härtungstiefe beträgt bevorzugt zwei bis drei Millimeter. Die Härte beträgt vorzugsweise mindestens 49 HRC. Insbesondere ist der Längenabschnitt der Achse zwischen den Lagerelementen gehärtet, da dieser besonders verschleißanfällig ist.

Eine weitere vorteilhafte Ausführung der Erfindung sieht vor, dass die Achse zumindest abschnittsweise chromatiert ist. Das bedeutet, dass die Achse mit einer Chrom-Schicht beschichtet ist. Die Schichtdicke beträgt bevorzugt zwanzig bis dreißig Mikrometer. Eine derartige Schicht führt zu einer besseren Verschleißbeständigkeit, indem die Oberfläche der Achse dadurch gehärtet wird, zudem werden ihre Gleiteigenschaften verbessert. Insbesondere ist der Längenabschnitt der Achse zwischen den Lagerelementen chromatiert, da dieser besonders verschleißanfällig ist.

In einer weiteren Ausführung der Erfindung ist vorgesehen, dass das erste Lagerelement eine Durchführung für elektrische und hydraulische Anschlüsse aufweist. Dabei kann es sich beispielsweise um eine weitere Öffnung in dem Tragelement handeln. Vorteilhafterweise sind damit elektrische und hydraulische Leitungen gut zugänglich, was Wartung und Montage vereinfacht. Bevorzugt ist die Öffnung im Wesentlichen kreisabschnittsförmig ausgestaltet.

Eine erfindungsgemäße Achsanordnung wird mit folgenden Verfahrensschritten hergestellt. Eine Achse wird in den beiden Lagerelementen einer Achsaufnahme angeordnet, so dass das konische Ende der Achse in dem konischen Aufnahmeraum der Buchse des zweiten Lagerelements angeordnet ist. Danach wird eine Schraube durch die Durchgangsbohrung der Achse und eine Bohrung in der Stirnseite der Buchse geführt und festgezogen, so dass das konische Ende der Achse vorgespannt in der Buchse gelagert ist. Das konische Ende der Achse ist damit radial und longitudinal unbeweglich in dem zweiten Lagerelement festgelegt. Dann wird eine Spannbuchse, die bereits vorher in dem Durchbruch des ersten Lagerelements angeordnet sein kann in bekannter Art und Weise gespannt und auf diese Weise ein Reibschluss zwischen der Achse und dem Lagerelement erzeugt. Dadurch wird die Achse auch in dem ersten Lagerelement unverschieblich festgelegt. Herstellungsbedingte Toleranzen werden auf diese Art und Weise eliminiert und die Achse spielfrei in der Achsaufnahme gelagert, so dass kein durch zu großes Spiel bedingter Verschleiß auftreten kann.

Weitere Eigenschaften und Merkmale der Erfindung ergeben sich aus den Figuren und der nachfolgenden Beschreibung.

Es zeigen:
- Figur 1: eine perspektivische Darstellung eines Heckteils eines Abfallsammelfahrzeugs,
- Figur 2: einen Ausschnitt aus Figur 1,
- Figur 3: eine perspektivische Darstellung einer Achsanordnung,
- Figur 4: eine Schnittdarstellung einer Achsaufnahme,
- Figur 5: eine seitliche Darstellung des Heckteils,
- Figur 6: eine Schnittdarstellung einer Achsaufnahme,
- Figur 7: eine Achse.

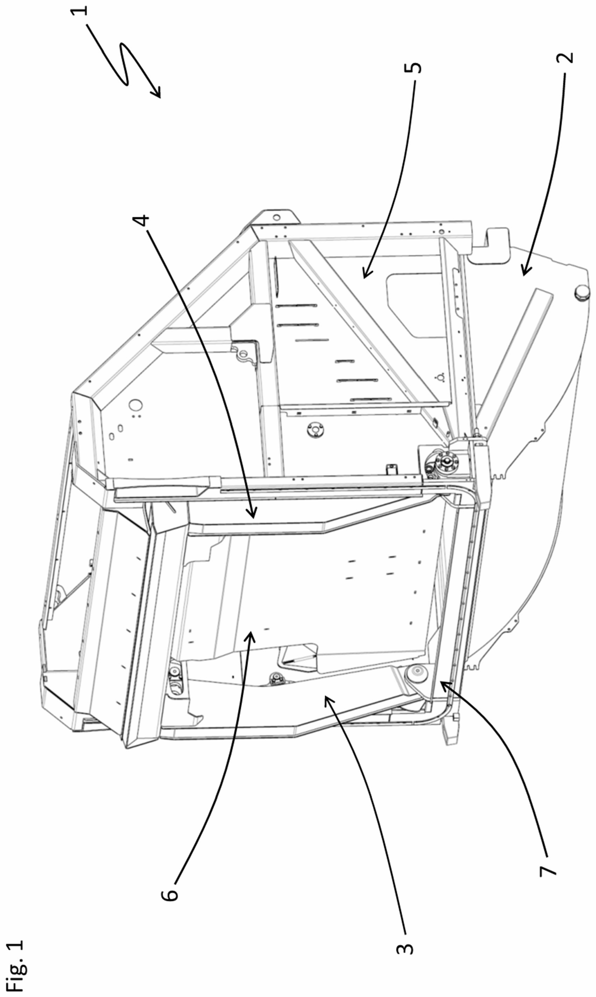

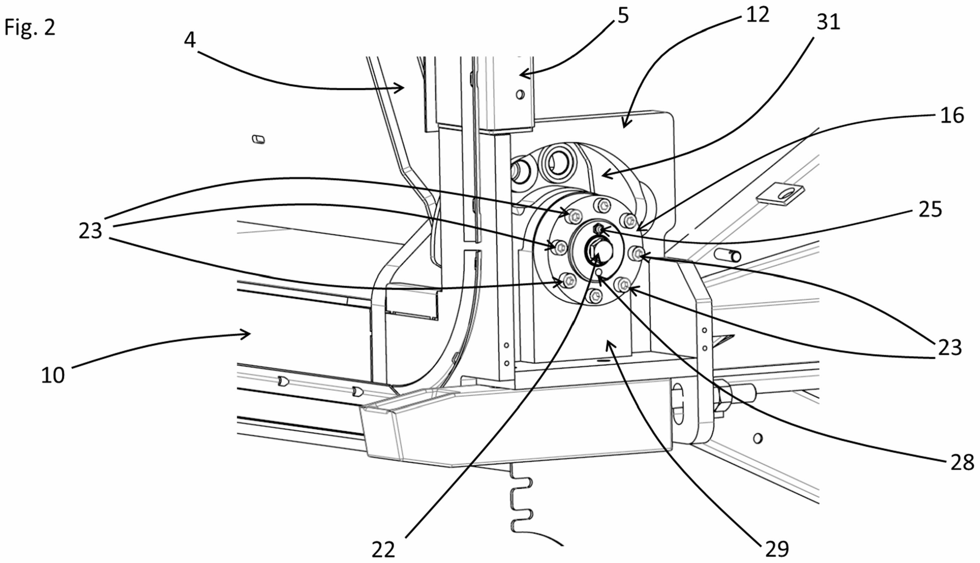

Figur 1 zeigt ein Heckteil 1 eines ansonsten nicht näher dargestellten Abfallsammelfahrzeugs. Mit der dem Betrachter zugewandten Seite ist das Heckteil 1 an dem Sammelraum des Aufbaus eines Abfallsammelfahrzeugs angeordnet. Auf der dem Betrachter abgewandten Seite befindet sich eine Einfüllöffnung durch die Abfallbehälter in die Ladewanne 2 entleert werden. Nach einer festgelegten Anzahl von Entleervorgängen oder bei Erreichen einer vorbestimmten Füllhöhe der Ladewanne 2 wird das Kompaktierungssystem aktiviert. Dieses besteht aus zwei Armen 3, 4, die mit ihrem in Einbaulage unteren Ende gelenkig an dem Rahmen 5 des Heckteils 1 angeordnet sind. Der Anbindungspunkt des rechten Arms 4 ist in Figur 2 vergrößert dargestellt. An den beiden Armen 3, 4 ist ebenfalls gelenkig eine Pressplatte 6 angeordnet. Diese wird hydraulisch betrieben über die Ladewanne 2 gezogen und räumt so den dort entleerten Abfall in den Sammelraum und komprimiert ihn dabei, indem der Abfall gegen ein in dem Sammelraum vorhandenes Ausstoßschild oder den dort bereits vorhandenen Abfall gepresst wird.

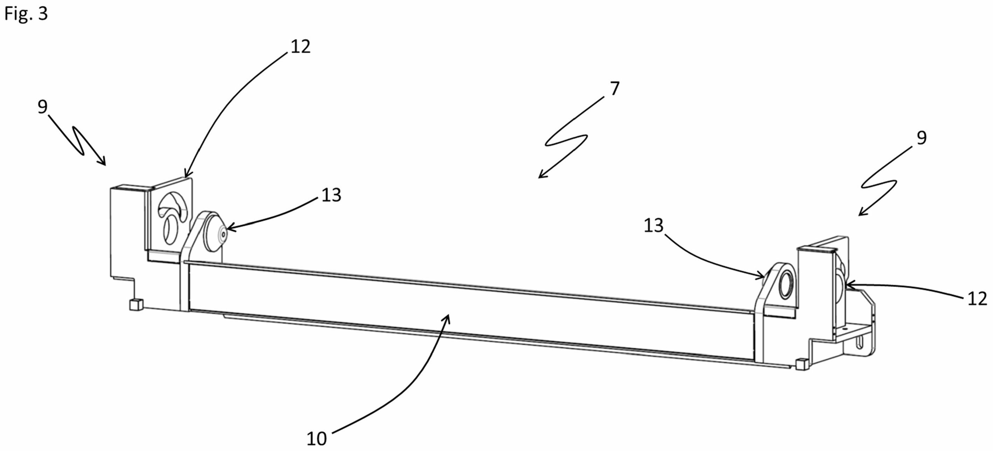

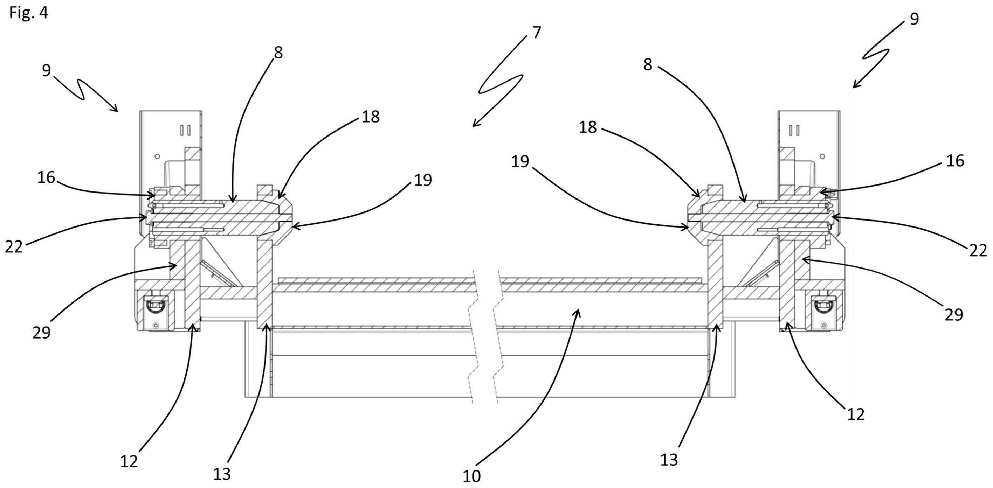

Für die gelenkige Lagerung der Arme 3, 4 an dem Rahmen 5 ist eine erfindungsgemäße Achsanordnung 7 vorgesehen. Eine perspektivische Darstellung der Achsanordnung 7 ist in Figur 3 gezeigt, allerdings ohne Achse 8. Eine Schnittdarstellung inklusive Achse 8 zeigt Figur 4.

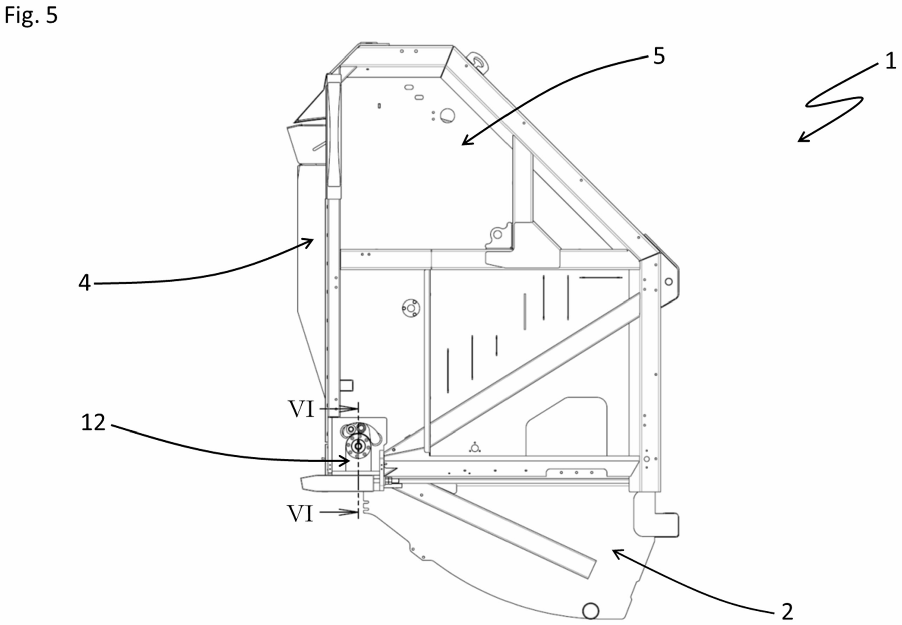

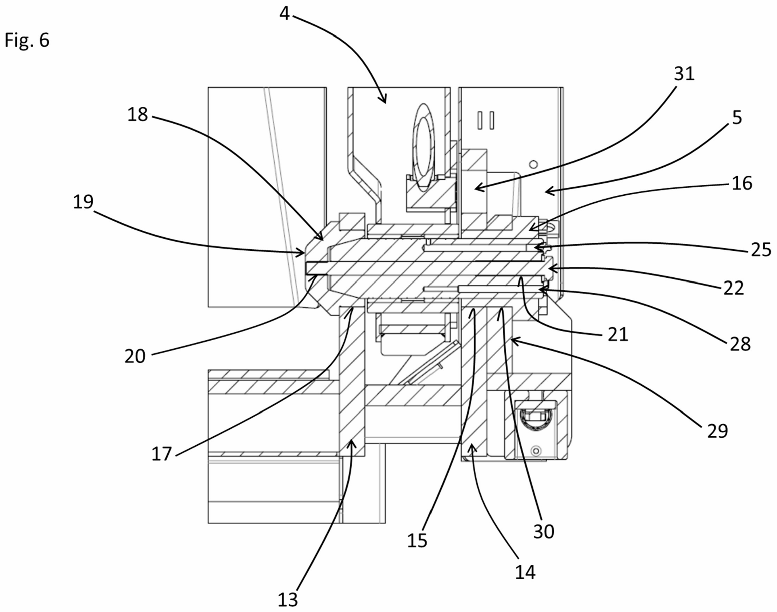

In diesem Ausführungsbeispiel weist die Achsanordnung 7 zwei Achsaufnahmen 9 auf, die beabstandet zueinander auf einem Querträger 10 angeordnet sind. Eine Achsaufnahme 9 ist in Figur 6 in einer Schnittdarstellung gemäß Figur 5 noch einmal vergrößert dargestellt. Die Achsaufnahmen 9 weisen jeweils eine Achse 8 mit einem konisch geformten Endabschnitt 11 und zwei voneinander beabstandete Lagerelemente 12, 13 auf. Das erste Lagerelement 12 ist als Blechbauteil ausgestaltet und umfasst ein Tragelement 14 mit einem ersten Durchbruch 15. In dem ersten Durchbruch 15 ist eine Spannbuchse 16 angeordnet. Das zweite Lagerelement 13 ist ebenfalls als Blechbauteil ausgestaltet und weist einen zweiten Durchbruch 17 auf. In diesem zweiten Durchbruch 17 ist eine Buchse 18 mittels Presspassung unverschieblich angeordnet.

Die Achse 8 ist in den beiden Lagerelementen 12, 13 angeordnet. Die Arme 3, 4 umfassen jeweils eine Achse 8 im Bereich zwischen den Lagerelementen 12, 13.

Die Buchse 18 des zweiten Lagerelements 13 weist einen konischem Aufnahmeraum auf, der auf den konischen Endabschnitt 11 der Achse 8 angepasst ist. Der konische Endabschnitt 11 kommt mit der konisch geformten Buchse 18 in vollflächige Anlage. In der Stirnseite 19 der Buchse 18, die auch als Anschlag für die Achse 8 wirkt, ist eine Bohrung 20 mit einem Gewinde vorgesehen. Auch die Achse 8 weist eine Durchgangsbohrung 21 auf, die zu der Bohrung 20 fluchtend ausgerichtet ist. Durch die Durchgangsbohrung 21 und die Bohrung 20 wird eine Schraube 22 geführt und festgezogen. Dadurch wird die Achse 8 in dem zweiten Lagerelement 13 vorgespannt, so dass sie longitudinal und radial unverschieblich, das heißt ohne Spiel, in dem Lagerelement 13 festgelegt ist.

Dann werden die Spannschrauben 23 der in dem ersten Durchbruch 15 des ersten Lagerelements 12 angeordneten Spannbuchse 16 angezogen und die Spannbuchse 16 gespannt, so dass die Achse 8 in dem ersten Lagerelement 12 reibschlüssig und ebenfalls ohne Spiel gehalten ist.

Durch diese sowohl in radialer als auch in longitudinaler Richtung der Achse 8 gebildete unverschiebliche Fixierung wird der Verschleiß der Achse 8 und auch der Achsaufnahmen 9 durch die tägliche Belastung erheblich reduziert. Die Arme 3, 4 des Kompaktierungssystems werden stetig bewegt und es wirken hohe Zugkräfte auf die Achsen 8 und die Achsaufnahmen 9. Haben die Achsen 8 bedingt durch Toleranzen im Herstellungsprozess Spiel, so erfahren sie stete minimale Bewegung, durch die auf Dauer Achsen 8 und zugehörige Lager verschlissen werden. Durch die unverschiebliche Festlegung der Achsen 8 ist das nicht gegeben.

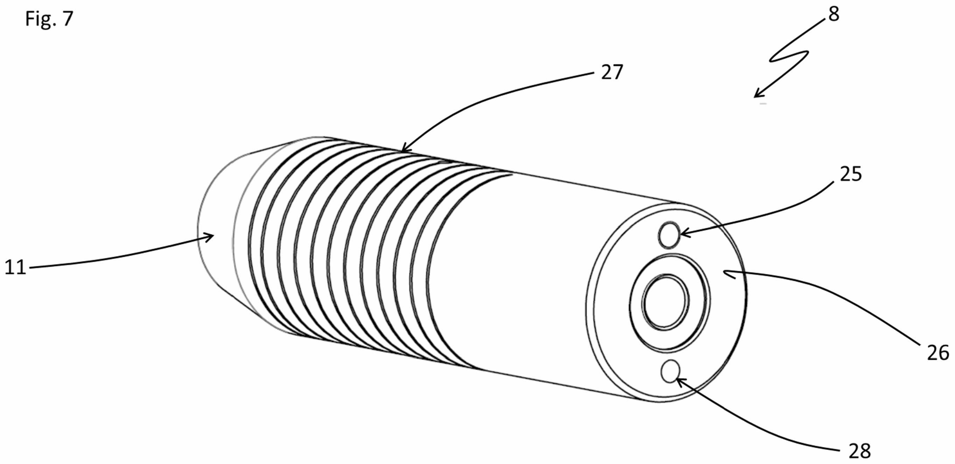

Um die Betriebsfähigkeit des Kompaktierungssystems sicherzustellen wird die Seitenfläche 24 der Achse 8 mit einem Schmiermittel geschmiert, das zwischen der Achse 8 und dem jeweiligen Arm 3, 4 angeordnet ist. Um die Schmierung möglichst einfach zu gestalten, weist die Achse einen Schmierungskanal 25 auf. Dieser Schmierungskanal 25 verläuft in einem ersten Abschnitt von einer Endfläche 26 der Achse 8, die dem konischen Endabschnitt 11 gegenüberliegt, zunächst parallel zu der Längsachse der Achse 8, knickt dann in einem zweiten Abschnitt im Wesentlichen senkrecht ab und mündet in der Seitenfläche 24 der Achse 8. Die Seitenfläche 24 (siehe Fig. 7) weist spiralförmig in Längsrichtung verlaufende Schmierungsrillen 27 auf. Das durch den Schmierungskanal 25 gepresste Schmiermittel tritt an der Mündung der Seitenfläche 24 wieder aus und wird durch die Bewegung des Armes 3, 4 um die Achse 8 entlang der Schmierungsrillen 27 verteilt.

Weiterhin verfügt die Achse 8 über einen Sensorkanal 28 in dem ein Sensor zur Bestimmung des Verschleißes der Achse 8, insbesondere im Bereich zwischen den beiden Lagerelementen 12, 13.

An dem ersten Lagerelement 12 ist jeweils ein Verstärkungselement 29 angeordnet. Dabei handelt es sich um ein weiteres Blechbauteil mit einer Öffnung 30 die fluchtend zu dem ersten Durchbruch 15 angeordnet ist und die ebenfalls von der Achse 8 durchgriffen ist. Das Verstärkungselement 29 ist schweißtechnisch mit dem ersten Lagerelement 12 verbunden. Dadurch erfährt das Lagerelement 12 eine verbesserte Verschleißfestigkeit und die Auflagefläche für die Achse 8 in dem ersten Lagerelement 12 wird vergrößert, was die Dauerfestigkeit zusätzlich erhöht.

Um die Verschleißfestigkeit der Achse 8 weiter zu verbessern ist diese im Bereich der Lagerelemente 12, 13 und im Bereich dazwischen gehärtet und chromatiert.

Weiterhin weist das erste Lagerelement 12 eine Durchführung 31 für elektrische und hydraulische Anschlüsse auf, so dass diese für Montage- und Wartungszwecke einfach zugänglich sind.

### Bezugszeichen

- 1: Heckteil
- 2: Ladewanne
- 3: Arm
- 4: Arm
- 5: Rahmen
- 6: Pressplatte
- 7: Achsanordnung
- 8: Achse
- 9: Achsaufnahmen
- 10: Querträger
- 11: Endabschnitt von 8
- 12: erstes Lagerelement
- 13: zweites Lagerelement
- 14: Tragelement
- 15: erster Durchbruch
- 16: Spannbuchse
- 17: zweiter Durchbruch
- 18: Buchse
- 19: Stirnseite von 18
- 20: Bohrung
- 21: Durchgangsbohrung
- 22: Schraube
- 23: Spannschraube.
- 24: Seitenfläche von 8
- 25: Schmierungskanal
- 26: Endfläche von 8
- 27: Schmierungsrillen
- 28: Sensorkanal
- 29: Verstärkungselement
- 30: Öffnung von 29
- 31: Durchführung

## Patentansprüche

1. Achsanordnung (7) für ein Kompaktierungssystem eines
Abfallsammelfahrzeuges mit zwei Achsaufnahmen (9) jeweils aufweisend eine Achse (8) mit einem konisch geformten ersten Endabschnitt (11),
zwei voneinander beabstandete Lagerelemente (12,13), wobei das erste Lagerelement (12) einen ersten Durchbruch (15) zur Aufnahme der Achse (8) aufweist und das zweite Lagerelement (13) eine Buchse (18) mit einem konischen Aufnahmeraum für die Achse (8) aufweist,
wobei die Achse (8) reibschlüssig in dem ersten Lagerelement (12) gehalten ist und der konisch geformte Endabschnitt (11) der Achse (8) in dem konischen Aufnahmeraum gehalten ist.

2. Achsanordnung (7) nach Anspruch 1 **dadurch gekennzeichnet, dass** das erste Lagerelement (12) eine in dem ersten Durchbruch (15) angeordnete Spannbuchse (16) aufweist.

3. Achsanordnung (7) nach Anspruch 1 oder 2 **dadurch gekennzeichnet, dass** das erste Lagerelement (12) ein im Bereich des ersten Durchbruches (15) angeordnetes Verstärkungselement (29) aufweist.

4. Achsanordnung (7) nach zumindest einem der vorstehenden Ansprüche **dadurch gekennzeichnet, dass** die Buchse (18) in einem zweiten Durchbruch (17) des zweiten Lagerelements (13), insbesondere mit einer Presspassung, angeordnet ist.

5. Achsanordnung (7) nach zumindest einem der vorstehenden Ansprüche **dadurch gekennzeichnet, dass** die Achsaufnahmen (9) beabstandet zueinander auf einem Querträger (10) angeordnet sind.

6. Achsanordnung (7) nach zumindest einem der vorstehenden Ansprüche **dadurch gekennzeichnet, dass** die Achse (8) eine longitudinale Durchgangsbohrung (21) aufweist, die fluchtend zu einer korrespondierenden Bohrung (20) in der Stirnseite (19) der Buchse (18) ausgerichtet ist, wobei die Achse (8) und die Buchse (18) mittels einer durch die Durchgangsbohrung (21) und die Bohrung (20) geführte Schraube (22) miteinander verbunden sind.

7. Achsanordnung (7) nach zumindest einem der vorstehenden Ansprüche **dadurch gekennzeichnet, dass** die Achse (8) mit ihrem konisch geformten Endabschnitt (11) vorgespannt in dem konischen Aufnahmeraum gehalten ist.

8. Achsanordnung (7) nach zumindest einem der vorstehenden Ansprüche **dadurch gekennzeichnet, dass** die Achse (8) in ihrem zwischen den Lagerelementen (12,13) liegenden Längenabschnitt Schmierungsrillen (27) aufweist, die vorzugsweise spiralförmig in Längsrichtung verlaufen.

9. Achsanordnung (7) nach zumindest einem der vorstehenden Ansprüche **dadurch gekennzeichnet, dass** die Achse (8) einen Schmierungskanal (25) aufweist mit einem in Längsrichtung der Achse verlaufenden ersten Abschnitt und einem im Wesentlichen senkrecht dazu zur Seitenfläche der Achse führenden zweiten Abschnitt, der in ihrem zwischen den Lagerelementen (12,13) liegenden Längenabschnitt mündet.

10. Achsanordnung (7) nach zumindest einem der vorstehenden Ansprüche **dadurch gekennzeichnet, dass** die Achse (8) einen Sensorkanal (28) aufweist, insbesondere für einen Sensor zur Bestimmung von Verschleiß.

11. Achsanordnung (7) nach zumindest einem der vorstehenden Ansprüche **dadurch gekennzeichnet, dass** die Achse (8) zumindest abschnittsweise gehärtet ist.

12. Achsanordnung (7) nach zumindest einem der vorstehenden Ansprüche **dadurch gekennzeichnet, dass** die Achse (8) zumindest abschnittsweise chromatiert ist.

13. Achsanordnung (7) nach zumindest einem der vorstehenden Ansprüche **dadurch gekennzeichnet, dass** das erste Lagerelement (12) eine Durchführung (31) für elektrische und hydraulische Anschlüsse aufweist.

## Claims

1. Axle arrangement (7) for a compaction system of a waste collection vehicle comprising two axle mounts (9) each having an axle (8) with a conically shaped first end portion (11), two spaced-apart bearing elements (12, 13), wherein the first bearing element (12) has a first opening (15) for receiving the axle (8) and the second bearing element (13) has a bushing (18) with a conical receiving space for the axle (8), wherein the axle (8) is held in the first bearing element (12) by friction and the conically shaped end portion (11) of the axle (8) is held in the conical receiving space.

2. Axle arrangement (7) according to claim 1 **characterized in that** the first bearing element (12) has a clamping bushing (16) arranged in the first opening (15).

3. Axle arrangement (7) according to claim 1 or 2 **characterized in that** the first bearing element (12) has a reinforcing element (29) arranged in the region of the first opening (15).

4. Axle arrangement (7) according to at least one of the preceding claims **characterized in that** the bushing (18) is arranged in a second opening (17) of the second bearing element (13), in particular with an interference fit.

5. Axle arrangement (7) according to at least one of the preceding claims **characterized in that** the axle mounts (9) are arranged spaced apart from each other on a crossbeam (10).

6. Axle arrangement (7) according to at least one of the preceding claims **characterized in that** the axle (8) has a longitudinal through-bore (21) which is aligned with a corresponding bore (20) in the end face (19) of the bushing (18), the axle (8) and the bushing (18) being connected to each other by means of a screw (22) guided through the through-bore (21) and the bore (20).

7. Axle arrangement (7) according to at least one of the preceding claims **characterized in that** the axle (8) is held with its conically shaped end portion (11) under preload in the conical receiving space.

8. Axle arrangement (7) according to at least one of the preceding claims **characterized in that** the axle (8) has lubrication grooves (27) in its longitudinal portion lying between the bearing elements (12, 13), which grooves preferably run spirally in the longitudinal direction.

9. Axle arrangement (7) according to at least one of the preceding claims **characterized in that** the axle (8) has a lubrication channel (25) with a first portion extending in the longitudinal direction of the axle and a second portion which leads substantially perpendicular to the first portion toward the side surface of the axle and opens into its longitudinal portion lying between the bearing elements (12, 13).

10. Axle arrangement (7) according to at least one of the preceding claims **characterized in that** the axle (8) has a sensor channel (28), in particular for a sensor for determining wear.

11. Axle arrangement (7) according to at least one of the preceding claims **characterized in that** the axle (8) is hardened at least in portions.

12. Axle arrangement (7) according to at least one of the preceding claims **characterized in that** the axle (8) is chromated at least in portions.

13. Axle arrangement (7) according to at least one of the preceding claims **characterized in that** the first bearing element (12) has a feedthrough (31) for electrical and hydraulic connections.

## Revendications

1. Agencement d'essieu (7) pour un système de compactage d'un véhicule de collecte de déchets, comportant deux logements pour essieu (9) présentant respectivement un essieu (8) comportant une première section formant extrémité (11) de forme conique et deux éléments formant paliers (12, 13) espacés l'un de l'autre, dans lequel le premier élément formant palier (12) présente un premier passage (15) permettant la réception de l'essieu (8) et le second élément formant palier (13) présente une douille (18) comportant un espace de logement conique pour l'essieu (8), dans lequel l'essieu (8) est maintenu, au moyen d'une liaison par friction, dans le premier élément formant palier (12) et la section formant extrémité (11) de forme conique de l'essieu (8) est maintenue dans l'espace de logement conique.

2. Agencement d'essieu (7) selon la revendication 1, **caractérisé en ce que** le premier élément formant palier (12) présente une douille de serrage (16) disposée dans le premier passage (15).

3. Agencement d'essieu (7) selon la revendication 1 ou 2, **caractérisé en ce que** le premier élément formant palier (12) présente un élément de renforcement (29) disposé dans la zone du premier passage (15).

4. Agencement d'essieu (7) selon au moins l'une des revendications précédentes, **caractérisé en ce que** la douille (18) est disposée dans un second passage (17) du second élément formant palier (13), en particulier avec un ajustement serré.

5. Agencement d'essieu (7) selon au moins l'une des revendications précédentes, **caractérisé en ce que** les logements pour essieu (9) sont disposés de manière à être espacés l'un de l'autre sur une barre transversale (10).

6. Agencement d'essieu (7) selon au moins l'une des revendications précédentes, **caractérisé en ce que** l'essieu (8) présente un alésage de passage (21) longitudinal qui est orienté de manière à être en affleurement à un alésage (20) correspondant dans le côté frontal (19) de la douille (18), dans lequel l'essieu (8) et la douille (18) sont reliés l'un à l'autre au moyen d'une vis (22) guidée à travers l'alésage de passage (21) et l'alésage (20).

7. Agencement d'essieu (7) selon au moins l'une des revendications précédentes, **caractérisé en ce que** l'essieu (8) est maintenu, de manière à être précontraint, dans l'espace de logement conique par sa section formant extrémité (11) de forme conique.

8. Agencement d'essieu (7) selon au moins l'une des revendications précédentes, **caractérisé en ce que** l'essieu (8) présente, dans sa section longitudinale située entre les éléments formant paliers (12, 13), des rainures de lubrification (27) qui s'étendent de préférence en spirale dans la direction longitudinale.

9. Agencement d'essieu (7) selon au moins l'une des revendications précédentes, **caractérisé en ce que** l'essieu (8) présente un canal de lubrification (25) comportant une première section s'étendant dans la direction longitudinale de l'essieu et une seconde section dirigée sensiblement perpendiculairement à celle-ci vers la surface latérale de l'essieu, laquelle seconde section débouche dans la section longitudinale de l'essieu située entre les éléments formant paliers (12, 13).

10. Agencement d'essieu (7) selon au moins l'une des revendications précédentes, **caractérisé en ce que** l'essieu (8) présente un canal de détection (28), en particulier pour une détection permettant de déterminer un état d'usure.

11. Agencement d'essieu (7) selon au moins l'une des revendications précédentes, **caractérisé en ce que** l'essieu (8) est trempé au moins dans certaines sections.

12. Agencement d'essieu (7) selon au moins l'une des revendications précédentes, **caractérisé en ce que** l'essieu (8) est chromaté au moins dans certaines sections.

13. Agencement d'essieu (7) selon au moins l'une des revendications précédentes, **caractérisé en ce que** le premier élément formant palier (12) présente un passage (31) pour des connexions électriques et des raccordements hydrauliques.
